# EUROPÄISCHE PATENTSCHRIFT

(11) **EP 2 590 282 B1**
(45) Veröffentlichungstag und Bekanntmachung des Hinweises auf die Patenterteilung: **15.07.2015**
(21) Anmeldenummer: 12306359.6
(22) Anmeldetag: 31.10.2012
(51) Int. Cl.: H02G 3/14

(54) **Vorrichtung für den Geräteeinbau bei Elektroinstallationen mit integrierter Haubensicherung**
Device for the installation of devices into electrical installations with integrated cover lock
Dispositif pour le montage d'appareils dans des installations électriques avec sécurisation de capot

(30) Priorität: 04.11.2011 DE 202011107455 U
(43) Veröffentlichungstag der Anmeldung: 08.05.2013
(73) Patentinhaber: Tehalit GmbH, 67716 Heltersberg (DE)
(72) Erfinder: Eberle, Patrick, 66292 Riegelsberg (DE); Speiser, Mathias, 67718 Schmalenberg (DE)
(74) Vertreter: Nuss, Laurent

(56) Entgegenhaltungen:
- WO-A1-2011/013039
- US-A- 5 317 108

## Beschreibung

Die vorliegende Erfindung betrifft eine Vorrichtung für den Geräteeinbau bei Elektroinstallationen mit einer integrierten Haubensicherung, die auf Wunsch über ein hörbares Geräusch freigebbar ist.

Die erfindungsgemäße Vorrichtung dient dem Geräteeinbau bei Elektroinstallationen. Eine solche Vorrichtung ist beispielsweise in der DE 200 08 823 U1 beschrieben. Darin wird eine Geräteeinbaueinheit für Sockelleisteninstallationskanäle gezeigt, die ein Unterteil und ein haubenartiges Oberteil, das auf das Unterteil aufsetzbar ist, umfasst. Die Geräteeinbaueinheit besitzt Einrichtungen zur lösbaren Befestigung des Oberteils am Unterteil, die von der Vorderfront aus betätigbar sind. Zur Befestigung der Haube an dem Unterteil ist an der Innenseite des Oberteils eine Gleitbahn angeformt. Die Gleitbahn besitzt einen Gleitschlitz, der in einen keilförmigen Entriegelungsschlitten gleitet, wobei der Entriegelungsschlitten durch eine Öffnung in der Vorderfront betätigbar ist. Am Unterteil ist passend zur Gleitbahn eine Zunge angeformt. Zur Verrastung sind an der Gleitbahn und an der Zunge miteinander korrespondierende Rastmittel angeformt. Die Rastmittel verrasten beim Aufsetzen des Oberteils selbsttätig und lösen sich beim Einschieben des Entriegelungsschlittens wieder. Eine andere Lösung zur Verbindung der Haube mit dem Unterteil ist in der DE 10 2004 063 442 B4 beschrieben, bei der die Haube über Winkelprofile mit dem Unterteil verbunden wird. Dadurch wird ein Klemmverschluss erzeugt.

Die beiden genannten Beispiele zur Sicherung einer Haube an dem jeweiligen Unterteil einer Geräteeinbauvorrichtung durch eine Rastverbindung oder eine Klemmverbindung sind in manchen Situationen bei einer erforderlichen Demontage schwer zu lösen oder bei deren Montage sehr aufwändig. Insbesondere das Abnehmen der Haube von dem Unterteil erweist sich bei den bekannten Lösungen als unbefriedigend. Eine herkömmliche Vorrichtung für den Geräteinbau bei Elektroinstallationen ist in WO 2011/013039 A1 offenbart.

Es ist daher Aufgabe der vorliegenden Erfindung, eine verbesserte Vorrichtung zum Geräteeinbau bei Elektroinstallationen anzugeben, bei der die Haube von dem Unterteil mit einem einfachen Montagewerkzeug, beispielsweise einem Schraubenzieher, schnell lösbar ist.

Diese Aufgabe wird gelöst durch eine Vorrichtung mit den Merkmalen des Anspruchs 1. Bevorzugte Aüsführungsformen finden sich in den Unteransprüchen wieder.

Die erfindungsgemäße Vorrichtung ermöglicht einen sicheren Verschluss der Haube mit dem Unterteil und eine hörbare Erkennung beim Öffnen des Verschlusses zum Zwecke des Abnehmens der Haube von dem Unterteil. Die erfindungsgemäße Vorrichtung besteht aus einem an sich bekannten Unterteil, das zur Aufnahme eines oder mehrerer Elektroinstallationsgeräte (z.B. Steckdosen, Netzwerkanschlüsse etc.) dient. Die Haube wird auf das Unterteil aufgesetzt und deckt dieses ab. An dem Gehäuse der Haube ist erfindungsgemäß ein in dessen Längsrichtung verschiebbares stiftartiges Hubelement vorgesehen. Das Hubelement korrespondiert mit einem an der Haube ausgebildeten leistenförmigen Rastelement, welches in oder unter wenigstens eine am Unterteil ausgebildete Federnocke greift. Dadurch werden die Haube und das Unterteil im Montagezustand zusammengehalten. Durch das Eingreifen eines Montagewerkzeuges (z.B. Schraubenzieher) wird das Hubelement nach oben geschoben, wobei die Federnocke in der Verschiebeposition des Hubelementes bedingt durch die Hubbewegung des mit dem Hubelement in Verbindung stehenden Rastelementes in Querrichtung federt und dadurch die Befestigung der Haube von dem Unterteil mit einem hörbaren Klick freigibt.

Zur Einführung des Montagewerkzeuges ist vorzugsweise das Hubelement am unteren Ende nach vorne durch eine Schräge verjüngt. Beim Einführen des Montagewerkzeuges wird dessen Ende unter die Schräge geführt, wodurch das Hubelement nach oben gedrückt wird. Dies bewirkt, dass das Federelement auf die Federnocke drückt, welche seitlich (d.h. in Querrichtung) zurückfedert und dadurch das Restelement freigibt.

Die Federnocke ist vorzugsweise elastisch, damit sie in die Ursprungsposition zurückfedern kann. Vorzugsweise ist die Federnocke innerhalb eines Freischnittes angeordnet.

In einer bevorzugten Ausführungsform ist das an der Haube angeformte Hubelement in einer am Unterteil ausgebildeten Kammer angeordnet und drückt von unten gegen das Rastelement. Zur Kabel- und Leitungsführung besitzt das Unterteil am Fußende vorzugsweise eine Schürze, wobei die Federnocke vorzugsweise im Bereich der Schürze ausgebildet ist. Beispielsweise kann die Federnocke Teil der Schürzenwand sein. Die Federnocke selbst kann zur Verklemmung des Rastelementes der Haube eine Nase besitzen, die auf dem Rastelement aufliegt und für den erforderlichen Halt sorgt. Beim Verschieben des Hubelementes gleitet das Rastelement über die Nase der Federnocke, wodurch die Haube vom Unterteil freigegeben wird.

In der Federnocke kann in einer alternativen Ausführungsform ein Schlitz zur Aufnahme des Rastelementes ausgebildet sein. Vorzugsweise ist das Rastelement der Haube leistenförmig und das Hubelement stiftförmig ausgestaltet.

Die Erfindung wird in den nachfolgenden Zeichnungen näher erläutert.

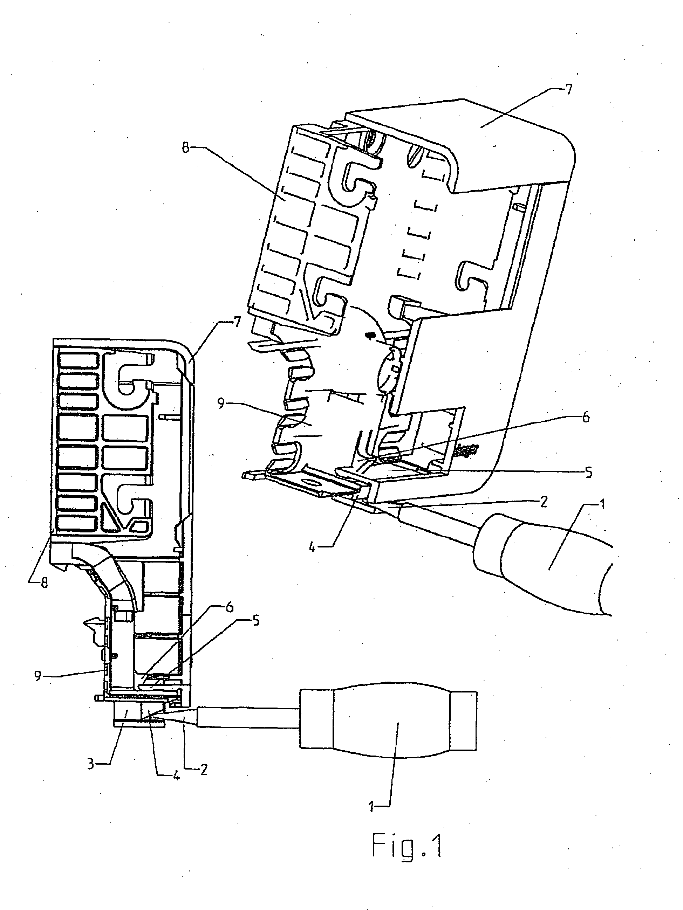

In Fig. 1 ist die erfindungsgemäße Vorrichtung für den Geräteeinbau bei Elektroinstallationen gezeigt. Die Haube 7 ist auf dem Unterteil 8 aufgesetzt. Das Unterteil 8 besitzt eine Schürze 9 zur Führung von Leitungen, beispielsweise um Elektroinstallationsgeräte anzuschließen. Am Fußende der Haube 7 ist ein stiftförmiges Hubelement 4 ausgebildet, das in einer Kammer 3 am Unterteil 8 angeordnet ist. Das Hubelement 4 ist an dessen Unterseite zur Führung eines Montagewerkzeuges 1 abgeschrägt. Beim Einführen des Montagewerkzeuges 1 in die Kammer 3 wird die Spitze 2 des Montagewerkzeuges 1 an die Schräge geführt, wodurch beim weiteren Hineinschieben des Montagewerkzeuges 1 das Hubelement 4 bei der gezeigten Anordnung nach oben gedrückt wird.

Das Hubelement 4 korrespondiert mit einem an der Haube 7 ausgebildeten leistenförmigen Rastelement 5. Das Rastelement 5 ist unter einer Federnocke 6 verklemmt, wodurch die Haube 7 fest mit dem Unterteil 8 verbunden ist.

In der Verschiebeposition des Hubelementes 4 gleitet das Rastelement 5 über die Federnocke 6, wodurch die Haube 7 von dem Unterteil 8 freigegeben wird. Dazu federt die Federnocke 6 leicht zurück. Die Freigabe der Haube 7 von dem Unterteil 8 ist für den Monteur in Form eines hörbaren "Klicks" wahrnehmbar. Dadurch wird dem Monteur angezeigt, dass der Verschluss zur Sicherung der Haube 7 an dem Unterteil 8 freigegeben ist und die Haube 7 von dem Unterteil 8 entnommen werden kann.

Bei der erfindungsgemäßen Lösung ist der Verschluss mit einem Handgriff über ein Montagewerkzeug 1 lösbar. Zudem wird der zuvor sichernde Verschluss, der die Haube 7 mit dem Unterteil 8 zusammenhält, hörbar gelöst.

Die Abbildung rechts in der Figur 1 zeigt die erfindungsgemäße Vorrichtung nochmals in isometrischer Darstellung.

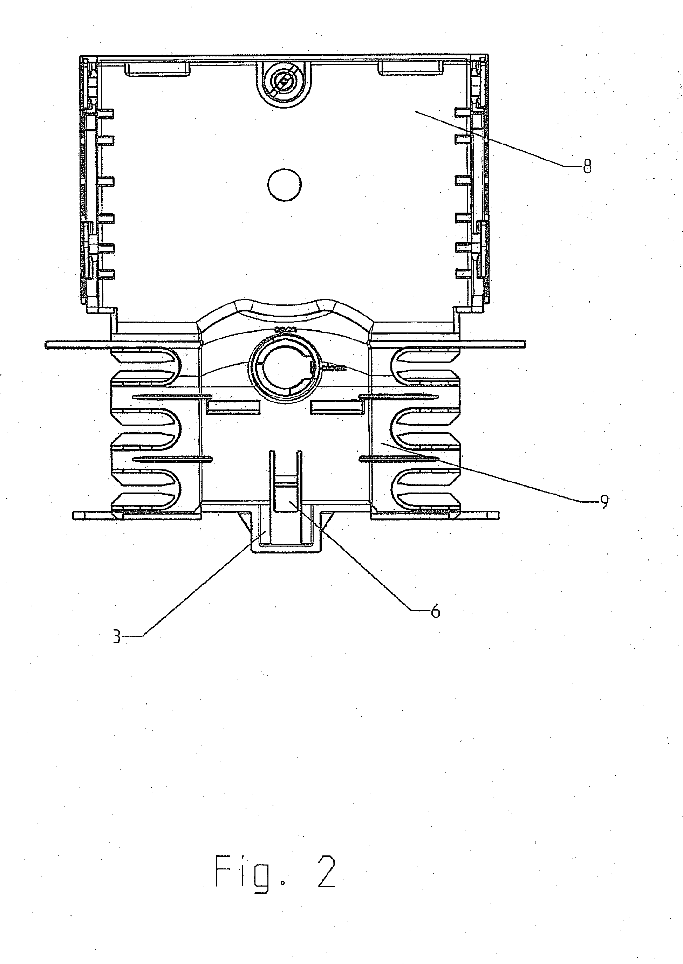

In Fig. 2 ist das Unterteil 8 mit der Schürze 9 von der Vorderseite gezeigt. Man erkennt die Federnocke 6. Deutlich ist die Kammer 3 zu erkennen, in welche das Hubelement 4 der Haube 7 greift.

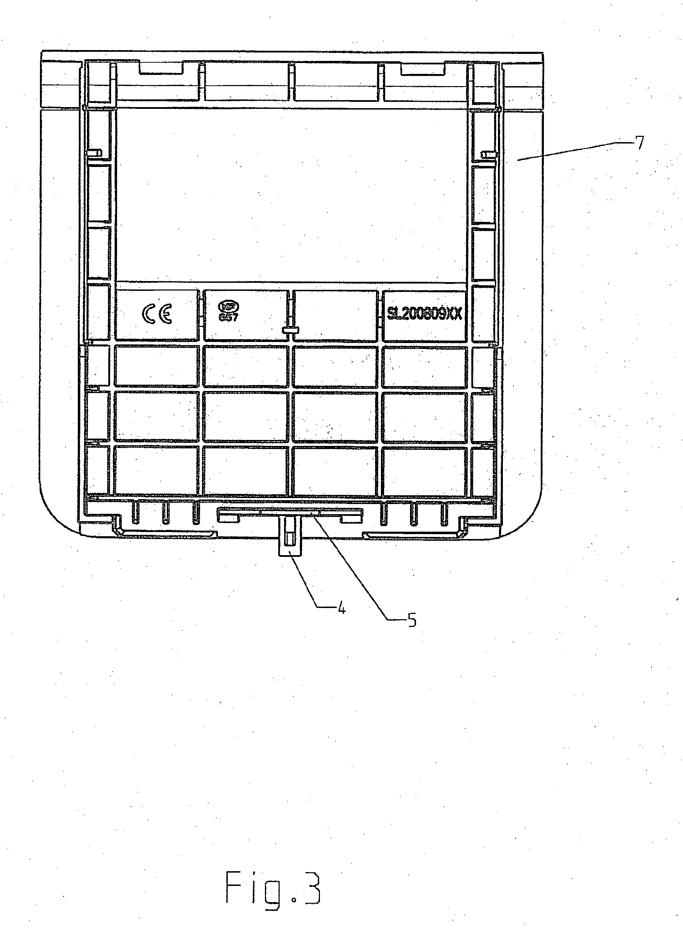

In Fig. 3 ist die Haube 7 (Deckel) gezeigt. An der Unterseite der Haube 7 erkennt man das Rastelement 5, das unter die Federnocke 6 des Unterteils 8 greift und das stiftförmige Rastelement 4. Durch diese Klemmverbindung wird die Haube 7 mit dem Unterteil 8 fest verbundenen und sicher gehalten.

Der Vorteil der vorliegenden Erfindung liegt zum einen darin, dass mit einem einfachen Montagewerkzeug die Haube 7 von dem Unterteil 8 getrennt werden kann. Dies geschieht durch einfaches Einstecken des Montagewerkzeuges in die Kammer 3 des Unterteils 8. Durch diese Interaktion wird die Federnocke 6 nach innen gedrückt und das Rastelement 5 mit einem hörbaren "Klick" freigegeben, was zum Lösen der Haube 7 von dem Unterteil 8 führt. Die Haube 7 kann dann bequem abgenommen werden, so dass die Elektroinstallationsgeräte im Inneren des Unterteils 8 frei und zugänglich liegen.

## Patentansprüche

1. Vorrichtung für den Geräteinbau bei Elektroinstallationen, bestehend aus einem Unterteil (8) zur Aufnahme eines oder mehrerer Elektroninstallationsgeräte und einer Haube (7) zum Aufsetzen auf das Unterteil (8), wobei an der Haube (7) ein in dessen Längsrichtung verschiebbares Hubelement (4) ausgebildet ist, **dadurch gekennzeichnet, dass** das Hubelement (4) mit einem an der Haube (7) ausgebildeten Rastelement (5) korrespondiert, welches in oder unter wenigstens eine am Unterteil (8) ausgebildete Federnocke (6) greift, wodurch die Haube (7) und das Unterteil (8) im Montagezustand zusammengehalten werden, wobei die Federnocke (6) in der Verschiebeposition des Hubelementes (4) bedingt durch die Hubbewegung des damit in Verbindung stehenden Rastelementes (5) in Querrichtung federbar ist, wodurch die Befestigung der Haube (7) von dem Unterteil (8) freigegeben wird.

2. Vorrichtung nach Anspruch 1, **dadurch gekennzeichnet, dass** das Hubelement (4) am unteren Ende eine sich nach vorne verjüngende Schräge zur Einführung eines Montagewerkzeuges aufweist.

3. Vorrichtung nach Anspruch 1 oder 2, **dadurch gekennzeichnet, dass** die Federnocke (6) in einem Freischnitt angeordnet ist.

4. Vorrichtung nach einem der vorhergehenden Ansprüche, **dadurch gekennzeichnet, dass** das Hubelement (4) der Haube (7) in einer am Unterteil (8) ausgebildeten Kammer (3) angeordnet ist und von unten gegen das Rastelement (5) der Haube (7) drückt.

5. Vorrichtung nach einem der vorhergehenden Ansprüche, **dadurch gekennzeichnet, dass** das Unterteil (8) am Fußende eine Schürze besitzt und die Federnocke (6) im Bereich der Schürze ausgebildet ist.

6. Vorrichtung nach einem der vorhergehenden Ansprüche, **dadurch gekennzeichnet, dass** die Federnocke (6) eine Nase besitzt.

7. Vorrichtung nach einem der vorhergehenden Ansprüche, **dadurch gekennzeichnet, dass** in der Federnocke (6) zur Aufnahme des Rastelementes (5) ein Schlitz ausgebildet ist.

8. Vorrichtung nach einem der vorhergehenden Ansprüche, **dadurch gekennzeichnet, dass** das Rastelement (5) leistenförmig ausgestaltet ist.

9. Vorrichtung nach einem der vorhergehenden Ansprüche, **dadurch gekennzeichnet, dass** das Hubelement (4) stiftförmig ausgestaltet ist.

## Claims

1. Device for the installation of devices in electric installations, consisting of a lower part (8) for receiving one or more electric installation devices and a hood (7) for placing on the lower part (8), wherein a lifting element (4) that can be displaced in the longitudinal direction thereof is formed on the hood (7), **characterised in that** the lifting element (4) corresponds with a latching element (5), which is formed on the hood (7) and engages in or under at least one spring cam (6) formed on the lower part (8), whereby the hood (7) and the lower part (8) are held together in the assembly state, wherein the spring cam (6), in the displacement position of the lifting element (4), can spring in the transverse direction, caused by the lifting movement of the latching element (5) connected thereto, so the fastening of the hood (7) is released from the lower part (8).

2. Device according to claim 1, **characterised in that** the lifting element (4) has, at the lower end, a bevel tapering forward for the introduction of an assembly tool.

3. Device according to claim 1 or 2, **characterised in that** the spring cam (6) is arranged in a free punch.

4. Device according to any one of the preceding claims, **characterised in that** the lifting element (4) of the hood (7) is arranged in a chamber (3) formed on the lower part (8) and presses from below against the latching element (5) of the hood (7).

5. Device according to any one of the preceding claims, **characterised in that** the lower part (8) has an apron at the foot end and the spring cam (6) is formed in the region of the apron.

6. Device according to any one of the preceding claims, **characterised in that** the spring cam (6) has a lug.

7. Device according to any one of the preceding claims, **characterised in that** a slot is formed in the spring cam (6) to receive the latching element (5).

8. Device according to any one of the preceding claims, **characterised in that** the latching element (5) is strip-shaped.

9. Device according to any one of the preceding claims, **characterised in that** the lifting element (4) is pin-shaped.

## Revendications

1. Dispositif pour le montage d'appareils dans des installations électriques, constitué d'une partie inférieure (8) destinée à recevoir un ou plusieurs appareils d'installations électriques et d'un capot (7) à poser sur la partie inférieure (8), sachant qu'un élément de levage (4) mobile en translation dans la direction longitudinale du capot (7) est formé sur ce dernier, **caractérisé en ce que** l'élément de levage (4) correspond avec un élément d'encliquetage (5) qui est formé sur le capot (7) et qui s'engage dans ou sous au moins une saillie élastique (6) formée sur la partie inférieure (8), le capot (7) et la partie inférieure (8) étant maintenus solidarisés dans l'état monté, sachant que la saillie élastique (6) est, dans la position de translation de l'élément de levage (4), mobile élastiquement en direction transversale par suite du mouvement de levage de l'élément d'encliquetage (5) qui se trouve en liaison avec l'élément de levage (4), de sorte que la fixation du capot (7) sur la partie inférieure (8) est libérée.

2. Dispositif selon la revendication 1, **caractérisé en ce que** l'élément de levage (4) présente à l'extrémité inférieure un biais se rétrécissant vers l'avant, destiné à l'introduction d'un outil de montage.

3. Dispositif selon la revendication 1 ou 2, **caractérisé en ce que** la saillie élastique (6) est disposée dans une découpe libre.

4. Dispositif selon l'une des revendications précédentes, **caractérisé en ce que** l'élément de levage (4) du capot (7) est disposé dans un compartiment (3) formé sur la partie inférieure (8) et exerce une pression par le dessous sur l'élément d'encliquetage (5) du capot (7).

5. Dispositif selon l'une des revendications précédentes, **caractérisé en ce que** la partie inférieure (8) possède une jupe à son extrémité de pied, et la saillie élastique (6) est formée dans la région de la jupe.

6. Dispositif selon l'une des revendications précédentes, **caractérisé en ce que** la saillie élastique (6) possède un ergot.

7. Dispositif selon l'une des revendications précédentes, **caractérisé en ce qu'**une fente destinée à recevoir l'élément d'encliquetage (5) est formée dans la saillie élastique (6).

8. Dispositif selon l'une des revendications précédentes, **caractérisé en ce que** l'élément d'encliquetage (5) est réalisé en forme de barrette.

9. Dispositif selon l'une des revendications précédentes, **caractérisé en ce que** l'élément de levage (4) est réalisé en forme de broche.
